# EUROPEAN PATENT APPLICATION

(11) **EP 4 759 644 A1**
(43) Date of publication of application: **17.06.2026**
(21) Application number: 24218810.0
(22) Date of filing: 10.12.2024
(51) Int. Cl.: B60R 21/36

(54) **AIRBAG ASSEMBLY FOR ALLEVIATING AN IMPACT OF A VULNERABLE ROAD USER ON A VEHICLE, A VEHICLE, AND A METHOD FOR OPERATING AN AIRBAG ASSEMBLY FOR A VEHICLE**

(71) Applicant: Volvo Car Corporation, 405 31 Göteborg (SE)
(72) Inventor: RUTELIN, Sebastian, 40531 Göteborg (SE); ROSENBERG, Johan, 40531 Göteborg (SE); KJELLANDER, Michaela, 40531 Göteborg (SE)
(74) Representative: Kransell & Wennborg KB

(57) **Abstract**

The disclosure relates to an airbag assembly (24) for alleviating an impact of a vulnerable road user on a vehicle (10). The airbag assembly (24) comprises a first inflatable airbag portion (26) storable in a front portion (14) of the vehicle (10) and deployable over a first a-pillar (20) of the vehicle (10) and a second inflatable airbag portion (28) storable in a front portion (14) of the vehicle (10) and deployable over a second a-pillar (22) of the vehicle (10). The airbag assembly (24) further comprises a non-inflatable holding means (46) interconnecting the first inflatable airbag portion (26) and the second inflatable airbag portion (28). The holding means (46) is storable in the front portion (14) of the vehicle (10) and extendable over a portion of a windscreen (16) of the vehicle (10) when the first inflatable airbag portion (26) and the second inflatable airbag portion (28) are in a deployed state (36, 40). Additionally, a vehicle (10) is described. Also, a method for operating an airbag assembly (24) for a vehicle (10) is presented.

## Description

### TECHNICAL FIELD

The present disclosure relates to an airbag assembly for alleviating an impact of a vulnerable road user on a vehicle.

Moreover, the present disclosure is directed to a vehicle.

Additionally, the present disclosure relates to a method for operating an airbag assembly for a vehicle.

### BACKGROUND ART

Nowadays, vehicles comprise various safety systems for reducing injury risk of passengers inside the vehicle as well as reducing the injury risk of other traffic participants involved in a crash situation with the vehicle. These traffic participants may be so-called vulnerable road users, e.g. pedestrians, cyclists or motor-cyclists. In general, vulnerable road users are understood as road users which are not in a car-type vehicle. In case the vehicle crashes with a traffic participant, protection mechanisms are activated to alleviate the impact and to reduce risks of injuries of the traffic participant. In this context, protection mechanisms may include the deploying of one or more airbags positioned outside of the vehicle cabin.

### SUMMARY

It is an objective of the present disclosure to improve protection mechanisms including deploying one or more airbags located outside the vehicle cabin thereby increasing impact protection for a vulnerable road user.

The problem is at least partially solved or alleviated by the subject matter of the independent claims of the present disclosure, wherein further examples are incorporated in the dependent claims.

According to a first aspect, there is provided an airbag assembly for alleviating an impact of a vulnerable road user on a vehicle. The airbag assembly comprises a first inflatable airbag portion storable in a front portion of the vehicle and deployable over a first a-pillar of the vehicle. Additionally, the airbag assembly comprises a second inflatable airbag portion storable in a front portion of the vehicle and deployable over a second a-pillar of the vehicle. The airbag assembly further comprises a non-inflatable holding means interconnecting the first inflatable airbag portion and the second inflatable airbag portion. The holding means is storable in the front portion of the vehicle and extendable over a portion of a windscreen of the vehicle when the first inflatable airbag portion and the second inflatable airbag portion are in a deployed state. Both the first inflatable airbag portion and the second inflatable airbag portion may be understood as a bag that may be selectively inflated with gas in case of an accident. A state in which an inflatable airbag portion is inflated with gas is also called a deployed state. In the present disclosure, the first inflatable airbag portion and the second inflatable airbag portion assume the deployed state simultaneously. In order to alleviate the impact of the vulnerable road user, the inflatable airbag portions are arranged between the vulnerable road user and the associated a-pillar. When not in use, i.e. when not inflated, the inflatable airbag portions assume a non-deployed or stored state in a front portion of the vehicle. The front portion of the vehicle refers to a portion of the vehicle, which is arranged in front of the windscreen along a standard forward driving direction. Thus, the front portion of the vehicle in particular comprises a front lid of the vehicle. The a-pillar may also be called an a-post. The first a-pillar and the second a-pillar may be two structural parts of the vehicle that are positioned on either side of the windscreen and connect a roof of the vehicle to the remaining portions of the vehicle provided below the windscreen, in particular the front portion. It is noted that for vehicles that do not comprise a roof at all or that do not comprise a rigid roof, e.g. convertible vehicles, a frame element extending along an upper edge of the windscreen may be regarded as the roof. This frame 20 element may be called an upper frame or top frame. In the context of the present disclosure, the term non-inflatable may be understood in that the holding means is not capable of being inflated. In other words, the holding means may not be filled with gas and/or liquid. Thus, the holding means being extendable over the portion of the windscreen may result from the first inflatable airbag portion and the second inflatable airbag portion being in the deployed state only. Using the holding means, a position of the first inflatable airbag portion and the second inflatable airbag portion is secured. Thus, effective protection of the vulnerable road user is achieved. Moreover, the holding means may provide additional impact protection for the vulnerable road user. In more detail, deploying both the first inflatable airbag portion and the second inflatable airbag portion, the non-inflatable holding means may be stretched over the portion of the windscreen of the vehicle, thereby alleviating an impact of the vulnerable road user when moving against this portion of the windscreen. Thus, improved overall impact protection may be achieved. Furthermore, the use of such non-inflatable holding means may lead to an increased reliability and effectiveness of the airbag assembly through additional structural support. This is because the non-inflatable holding means may improve the positioning and deployment of the first inflatable airbag portion and of the second inflatable airbag portion. Using a non-inflatable holding means further has the effect that inflators are only needed in order to inflate the first inflatable airbag portion and the second inflatable airbag portion. Consequently, the inflators may be compact.

According to an example, the holding means comprises a holding strap interconnecting the first inflatable airbag portion and the second inflatable airbag portion. Additionally or alternatively, the holding means comprises a protection sheet interconnecting the first inflatable airbag portion and the second inflatable airbag portion. This means that there are three alternatives. In the first alternative, the holding means comprises the holding strap interconnecting the first inflatable airbag portion and the second inflatable airbag portion. The holding strap has the effect that the first inflatable airbag portion and the second inflatable airbag portion may be securely connected to each other. Thus, the structural stability of the airbag assembly may be improved. In the second alternative, the holding means comprises the protection sheet interconnecting the first inflatable airbag portion and the second inflatable airbag portion. The protection sheet may serve as an additional protection element for alleviating the impact of the vulnerable road user on the vehicle. In more detail, the protection sheet may be seen as a protective layer interconnecting the first inflatable airbag portion and the second inflatable airbag portion. It is understood that the protection sheet may as well provide the same functionalities as the holding strap. Thus, the protection sheet may have the effect that the first inflatable airbag portion and the second inflatable airbag portion may be securely connected to each other. In the third alternative, the holding means comprises both the holding strap interconnecting the first inflatable airbag portion and the second inflatable airbag portion, and the protection sheet interconnecting the first inflatable airbag portion and the second inflatable airbag portion. Using both the holding strap and the protection sheet, the structural stability of the airbag assembly and the impact protection for the vulnerable road user may be further improved.

According to an example, the first inflatable airbag portion and/or the second inflatable airbag portion may comprise a tether for controlling and/or adapting the cushioning effect in the deployed state of the associated inflatable airbag portion. Using the tether, the manner the inflatable airbag portion is deployed and/or a geometric form of the inflatable airbag portion in the deployed state may be controlled and/or adapted. The tether is separate from the holding means.

According to an example, the protection sheet is deployable at a distance of the windscreen of the vehicle for alleviating an impact of the vulnerable road user on the windscreen. In other words, the protection sheet and the windscreen of the vehicle form a gap between each other. This gap may be filled with ambient air. Thus, an impact of a vulnerable road user on the protection sheet may be decelerated by deforming and/or moving the protection sheet into this gap. This has the effect that a protection of the vulnerable road user is further improved.

In an example, the airbag assembly comprises a third inflatable airbag portion. The third inflatable airbag portion is storable in a front portion of the vehicle and deployable over a portion of a windscreen of the vehicle. In a deployed state, the third inflatable airbag portion is arranged between the windscreen and the protection sheet such that the protection sheet is supported in a position which is located at a distance of the windscreen. In this context, the third inflatable airbag portion may be arranged in a lateral center of the windscreen. In other words, the third inflatable airbag portion may be arranged in the middle of the wind screen when considering a lateral direction of the vehicle. In an example, the third inflatable airbag portion, the first inflatable airbag portion and the second inflatable airbag portion may be inflatable using the same inflator unit. This has the effect that a protection of the vulnerable road user is further improved.

According to an example, the protection sheet is furled or folded when in a stored state. Furled may be understood as rolled. Both the protection sheet being furled or folded may lead to a compact and efficient storage of the protection sheet. Thus, a comparatively small space is needed when the protection sheet is in the stored state. Moreover, the protection sheet being furled or folded may lead to a fast and smooth deployment of the first inflatable airbag portion and the second inflatable airbag portion, if the folding or furling is done such that the protection sheet may be unfolded or unfurled at low resistance.

According to an example, the holding means is connected to a lower half of the first inflatable airbag portion and to a lower half of the second inflatable airbag portion, if the first inflatable airbag portion and the second inflatable airbag portion are in the deployed state. This may enhance the overall stability of the airbag assembly. Further, the effectiveness of the deployment of the first inflatable airbag portion and of the second inflatable airbag portion may be further enhanced by keeping the first inflatable airbag portion and the second inflatable airbag portion aligned and properly positioned during deployment. This has the effect that the overall impact protection may be further improved by reducing the risk of the first inflatable airbag portion and the second inflatable airbag portion shifting or deforming during deployment. Thus, the overall effectiveness of the airbag system may be further enhanced. Moreover, since it is more likely that a vulnerable road user collides with a lower part of a windscreen than with an upper part of a windscreen, a holding means connected to a lower half of the first inflatable airbag portion and to a lower half of the second inflatable airbag portion offers a higher degree of protection for a vulnerable road user.

According to an example, the non-inflatable holding means, e.g. the protection sheet, comprises a fabric material and/or a plastics material. The material of the non-inflatable holding means may comprise polyamide and/or polyethylene terephthalate. The use of fabric material and/or plastics material has the effect that the non-inflatable holding means, e.g. the protection sheet, may be lightweight and flexible. At the same time, using fabric material and/or plastics material allows to configure the non-inflatable holding means such that it can withstand high forces. The use of fabric material and plastics material may as well be combined. This may increase the overall durability and effectiveness of the airbag assembly. The material of the protection sheet may be the same as the material of the first inflatable airbag portion and the second inflatable airbag portion, meaning their cushion material. It is emphasized that the mechanical properties of the material of the protection sheet may be the same as the mechanical properties of the material of the first inflatable airbag portion and the second inflatable airbag portion.

According to an example, a thickness of the protection sheet may be comparable to a thickness of the airbag cushion material of the first inflatable airbag portion and the second inflatable airbag portion. Alternatively, the thickness of the protection sheet may be smaller than double the thickness of the airbag cushion material or equal double the thickness of the airbag cushion material if the protection sheet comprises a double layer of material. More generally, a range of the thickness of the protection sheet may be 1 to 4 times the thickness of the airbag cushion material.

According to an example, the first inflatable airbag portion is bar-shaped when in the deployed state. The bar-shaped first inflatable airbag portion is arrangeable along the first a-pillar of the vehicle. The second inflatable airbag portion is bar-shaped when in the deployed state. The bar-shaped second inflatable airbag portion is arrangeable along the second a-pillar of the vehicle. In this context, bar-shaped may be understood in that both the first inflatable airbag portion and the second inflatable airbag portion are longer than wide or thick. More precisely, a largest dimension of the first inflatable airbag portion and a largest dimension of the second inflatable airbag portion may be at least three times as large as the respectively remaining two dimensions. In particular, the remaining two dimensions may be substantially the same or differ by 50% or less. This shape of the first inflatable airbag portion and of the second inflatable airbag portion has the effect that both the first inflatable airbag portion and the second inflatable airbag portion may be reliably and precisely arrangeable along the respective first a-pillar and second a-pillar.

According to an example, the first inflatable airbag portion is L-shaped when in the deployed state. A first leg of the L-shaped first inflatable airbag portion is arrangeable along the first a-pillar of the vehicle. A second leg of the L-shaped first inflatable airbag portion is arrangeable at least partially over the windscreen and/or a front lid, e.g. essentially horizontally. Also the second inflatable airbag portion may be L-shaped when in the deployed state. A first leg of the L-shaped second inflatable airbag portion is arrangeable along the second a-pillar of the vehicle. A second leg of the L-shaped second inflatable airbag portion is arrangeable at least partially over the windscreen and/or the front lid, e.g. essentially horizontally. In this context, the front lid may be understood as a hood or a bonnet. It is noted that the front lid may not necessarily cover a motor located underneath the front lid. In this case, the front lid may cover a frunk, for example. An L-shaped inflatable airbag portion may be understood in that an inflatable airbag portion comprises two bar-shaped portions which are arranged at an angle between 60 degrees and 120 degrees. The L-shaped first inflatable airbag portion may provide a comprehensive or global coverage over the first a-pillar as well as over at least a portion of the windscreen and/or the front lid and the L-shaped second inflatable airbag portion may provide a comprehensive or global coverage over the second a-pillar as well as over at least a portion of the windscreen and/or the front lid. This has the effect that a further improved impact protection on various areas of the vehicle may be achieved.

According to an example, the first inflatable airbag portion and the second inflatable airbag portion are formed as portions of a U-shaped airbag. A U-shaped airbag may be understood as an airbag comprising three bar-shaped portions which are arranged such that the three bar-shaped portions form the U-shape. An angle between adjacent bar-shaped portions may be 60 degrees to 120 degrees. The U-shaped airbag may be considered as a singular airbag. Thus, the structural integrity and stability of the airbag assembly may be further improved because no additional airbag parts are needed. Moreover, the complexity of the airbag assembly may be reduced and the manufacturing of the airbag assembly may be further facilitated because less parts are needed.

According to an example, the airbag assembly further comprises a singular inflator unit coupled to the first inflatable airbag portion and to the second inflatable airbag portion and configured for selectively inflating the first inflatable airbag portion and the second inflatable airbag portion simultaneously. Alternatively, the airbag assembly further comprises a first inflator unit coupled to the first inflatable airbag portion and configured for inflating the first inflatable airbag portion and a second inflator unit coupled to the second inflatable airbag portion and configured for inflating the second inflatable airbag portion. The first inflatable airbag portion and the second inflatable airbag portion are inflatable only simultaneously. In this context, the use of a singular inflator unit may facilitate the manufacturing of the airbag assembly. This is because the number of parts of the airbag assembly and, thus, a complexity of the airbag assembly may be reduced. Having two separate inflator units enhances the flexibility when arranging the inflatable portions of the airbag assembly. In both alternatives, the airbag assembly comprising the first inflatable airbag portion and the second inflatable airbag portion may be deployed reliably.

According to an example, the first inflatable airbag portion and the second inflatable airbag portion are stored in separate housings when in the non-deployed state. In more detail, the first inflatable airbag portion may be stored in a first housing and the second inflatable airbag portion may be stored in a second housing. Separate housings may allow a modular and flexible manufacturing of the overall airbag assembly because the separate housings may be placed independently in the vehicle. Additionally, the maintenance and replacement of the first inflatable airbag portion and/or the second inflatable airbag portion may be facilitated.

According to an example, the first inflatable airbag portion and the second inflatable airbag portion are stored in a shared housing when in the non-deployed state. In this context, the shared housing may also be referred to as a common housing of the first inflatable airbag portion and the second inflatable airbag portion. Thus, only one housing is provided, which may reduce the complexity and, thus, simplify the overall airbag assembly due to the reduced number of components.

According to a second aspect, there is provided a vehicle. The vehicle comprises an airbag assembly of the first aspect. As has been mentioned above, using such airbag assembly the overall impact protection for the vulnerable road user may be further improved. Furthermore, the use of the non-inflatable holding means may lead to an increased reliability and effectiveness of the airbag assembly of the vehicle through additional structural support.

According to a third aspect, there is provided a method for operating an airbag assembly for a vehicle. The method comprises selectively deploying a first inflatable airbag portion over a first a-pillar and a second inflatable airbag portion over a second a-pillar of the vehicle and simultaneously extending a holding means between the first inflatable airbag portion and the second inflatable airbag portion. Deploying the first inflatable airbag portion over the first a-pillar and the second inflatable airbag portion over the second a-pillar simultaneously may be understood in that both the first inflatable airbag portion and the second inflatable airbag portion are deployed at the same time in case of a crash. As a result, an impact of a vulnerable road user involved in an accident with the vehicle may be alleviated in an enhanced manner. This is because the holding means extends between the first inflatable airbag portion and the second inflatable airbag portion. In simplified words, in case the vulnerable road user is about to collide with the vehicle, both the first inflatable airbag portion and the second inflatable airbag portion deploy, covering the first a-pillar and the second a-pillar, respectively. When the two inflatable airbag portions are in the deployed state, the holding means extends between the two inflatable airbag portions. Thereby, operating such airbag assembly may further enhance the impact protection for the vulnerably road user independently of the position, where the collision may take place. This has the effect that the risk of injuring vulnerable road users may be further reduced. Altogether, the vehicle safety may be improved. Moreover, the airbag assembly may be operated in an efficient manner.

According to an example, extending the holding means comprises unfurling or unfolding the holding means. This may lead to facilitated deployment of the first inflatable airbag portion and the second inflatable airbag portion. Furthermore, only a small space is needed when the holding means, e.g. a protection sheet, is in the stored state. In other words, the holding means or the protection sheet being unfurled or unfolded may lead to a fast and smooth deployment of the first inflatable airbag portion and the second inflatable airbag portion.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: schematically shows a vehicle according to the present disclosure comprising an airbag assembly according to the present disclosure, wherein the airbag assembly may be operated using a method according to the present disclosure,
- Figure 2: schematically shows a first example of the airbag assembly of the vehicle of Figure 1 in a schematic view along direction II of Figure 1,
- Figure 3: schematically shows the airbag assembly of Figure 2, wherein a first inflatable airbag portion and a second inflatable airbag portion are in a deployed state,
- Figure 4: schematically shows a second example of the airbag assembly of the vehicle of Figure 1 in a schematic view along direction IV of Figure 1,
- Figure 5: schematically shows the airbag assembly of Figure 4, wherein a first inflatable airbag portion and a second inflatable airbag portion are in a deployed state, and
- Figure 6: shows a third example of the airbag assembly in a view corresponding to the view of Figure 5.

### DETAILED DESCRIPTION

The Figures are merely schematic representations and serve only to illustrate examples of the disclosure. Identical or equivalent elements are in principle provided with the same reference signs.

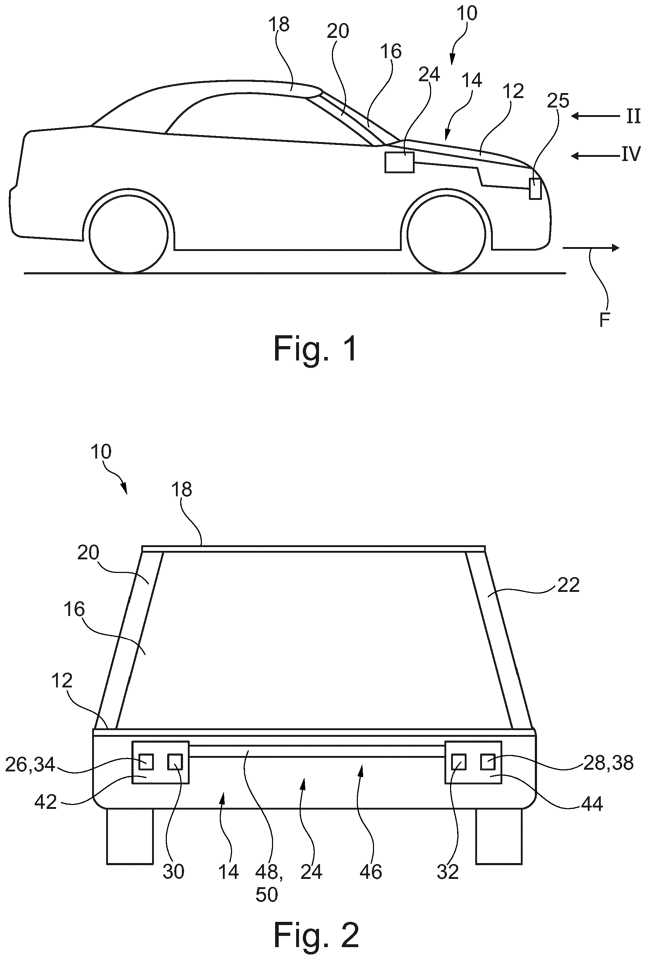

Figure 1 shows a vehicle 10 that comprises a front lid 12. In the present example, the front lid 12 is a bonnet or a hood covering a front portion 14 of the vehicle 10. It is noted that the front lid 12 may also be a cover element covering a frunk, if no motor is located under the front lid 12.

In this context, the front portion 14 comprises structural parts (not shown) of a body of the vehicle 10 which are arranged in front of a windscreen 16 along a standard forward driving direction F.

The vehicle 10 further comprises a roof 18.

The vehicle 10 also comprises a first a-pillar 20 and a second a-pillar 22, wherein each of the first a-pillar 20 and the second a-pillar 22 is mechanically connected to the roof 18 and to the front portion 14 of the vehicle 10 (see Figures 2 to 6). In other words, the first a-pillar 20 and the second a-pillar 22 both extend between the front portion 14 of the vehicle 10 and the roof 18. Moreover, the first a-pillar 20 and the second a-pillar 22 are arranged on opposite lateral sides of the windscreen 16.

The vehicle 10 further comprises an airbag assembly 24.

The airbag assembly 24 is configured to alleviate an impact of a vulnerable road user on the vehicle 10 in case of a crash situation.

To this end, the airbag assembly 24 is communicatively coupled to a sensor unit 25 configured to detect a crash or imminent crash.

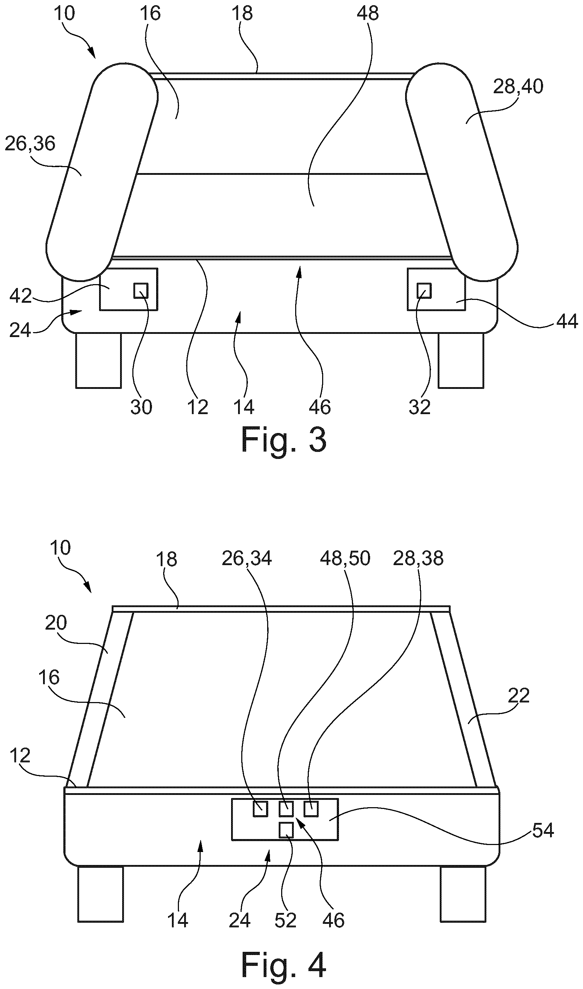

A first example of the airbag assembly 24 is shown in Figures 2 and 3.

The airbag assembly 24 comprises a first inflatable airbag portion 26 and a second inflatable airbag portion 28.

The airbag assembly 24 further comprises a first inflator unit 30 and a second inflator unit 32.

The first inflator unit 30 is coupled to the first inflatable airbag portion 26 and the second inflator unit 32 is coupled to the second inflatable airbag portion 28.

The first inflator unit 30 is configured for inflating the first inflatable airbag portion 26 and the second inflator unit 32 is configured for inflating the second inflatable airbag portion 28.

In more detail, the first inflator unit 30 is configured to inflate the first inflatable airbag portion 26 only such that the first inflatable airbag portion 26 changes from a non-deployed state 34 to a deployed state 36.

The second inflator unit 32 is configured to inflate the second inflatable airbag portion 28 only such that the second inflatable airbag portion 28 changes from a non-deployed state 38 to a deployed state 40.

It is emphasized that the first inflatable airbag portion 26 and the second inflatable airbag portion 28 are inflatable only simultaneously.

The first inflatable airbag portion 26 and the second inflatable airbag portion 28 are stored in separate housings when in the non-deployed state 34, 38 or stored state.

This means that the first inflatable airbag portion 26 is stored in a first housing 42 and the second inflatable airbag portion 28 is stored in a second housing 44 when in the non-deployed state 34, 38.

The first housing 42 and the second housing 44 are both arranged in the front portion 14 of the vehicle 10. More precisely, the first housing 42 and the second housing 44 are arranged adjacent to a lower edge of the windscreen 16. When considering the standard forward driving direction F, the first housing 42 and the second housing 44 are arranged in front of the windscreen 16, but directly adjacent to the windscreen 16.

As a result, the first inflatable airbag portion 26 and the second inflatable airbag portion 28 are both stored in the front portion 14 of the vehicle 10 when in the non-deployed state 34, 38.

In the present example, both the first inflatable airbag portion 26 and the second inflatable airbag portion 28 are stored under the front lid 12.

In the present example, the first housing 42 and the second housing 44 are arranged at a distance to each other.

In more detail, the first housing 42 is arranged closer to the first a-pillar 20 than to the second a-pillar 22.

The second housing 44 is arranged closer to the second a-pillar 22 than to the first a-pillar 20.

Thus, in the present example, the first inflatable airbag portion 26 is deployable over only the first a-pillar 20 of the vehicle 10 and the second inflatable airbag portion 28 is deployable over only the second a-pillar 22 of the vehicle 10.

In other words, the first inflatable airbag portion 26 and the second inflatable airbag portion 28 are deployable over different ones of the first a-pillar 20 and the second a-pillar 22.

Generally speaking, the first inflatable airbag portion 26 is deployable over only one of the first a-pillar 20 and the second a-pillar 22 of the vehicle 10, and the second inflatable airbag portion 28 is deployable over only one of the respective other one of the first a-pillar 20 and the second a-pillar 22 of the vehicle 10.

Further, in this example, the first inflator unit 30 is arranged in the first housing 42 and the second inflator unit 32 is arranged in the second housing 44.

It is noted that, in general, the first inflatable airbag portion 26 and the second inflatable airbag portion 28 may have various shapes.

In the present first example, both the first inflatable airbag portion 26 and the second inflatable airbag portion 28 are bar-shaped when in the deployed state 36, 40 (see Figure 3).

It is emphasized that the bar-shaped first inflatable airbag portion 26 is arranged only along the first a-pillar 20 of the vehicle 10 when in deployed state 36 and the second inflatable airbag portion 28 is arranged only along the second a-pillar 22 of the vehicle 10 when in deployed state 40.

The airbag assembly 24 further comprises a non-inflatable holding means 46.

It is pointed out that, in this context, non-inflatable is to be understood in that the holding means 46 is not capable of being inflated, meaning cannot be filled with gas and/or liquid.

The holding means 46 interconnects the first inflatable airbag portion 26 and the second inflatable airbag portion 28.

In the present example, the holding means 46 is connected to a lower half of the first inflatable airbag portion 26 and to a lower half of the second inflatable airbag portion 28, if the first inflatable airbag portion 26 and the second inflatable airbag portion 28 are in the deployed state 36, 40.

The holding means 46 is stored in the front portion 14 of the vehicle 10.

Further, in the present first example, the holding means 46 is arranged between the first housing 42 and the second housing 44 when the first inflatable airbag portion 26 and the second inflatable airbag portion 28 are in the non-deployed state 34, 38.

As a result, the holding means 46 is extendable over a portion of the windscreen 16 of the vehicle 10 when the first inflatable airbag portion 26 and the second inflatable airbag portion 28 are in the deployed state 36, 40.

In the present example, the holding means 46 comprises a protection sheet 48 interconnecting the first inflatable airbag portion 26 and the second inflatable airbag portion 28.

The protection sheet 48 is furled when in a stored state 50.

Thus, the protection sheet 48 unfurls when the first inflatable airbag portion 26 and the second inflatable airbag portion 28 are transitioned into the deployed state 36, 40.

The protection sheet 48 is deployable at a distance of the windscreen 16 of the vehicle 10 for alleviating an impact of the vulnerable road user on the windscreen 16. This means that the protection sheet 48 is stretched or tensioned between the first inflatable airbag portion 26 and the second inflatable airbag portion 28 if the first inflatable airbag portion 26 and the second inflatable airbag portion 28 are deployed. Hence, the distance between the windscreen 16 and the protection sheet 48, and a structural stiffness and/or elasticity of the protection sheet 48 have a dampening effect on the impact. Thus, the distance, the structural stiffness and/or elasticity are examples of design parameters that needs to be configured as per implementation to provide the sought effect, i.e. to alleviate an impact of the vulnerable road user on the windscreen 16.

This means that the protection sheet 48 is arranged at a distance from the windscreen 16 if the first inflatable airbag portion 26 and the second inflatable airbag portion 28 are in the deployed state. Thus, an impact of a vulnerable road user on the protection sheet 48 may be alleviated by deforming and/or moving the protection sheet 48 towards the windscreen 16. This deformation and/or movement decelerates a movement of the vulnerable road user.

The protection sheet 48 comprises a fabric material and a plastics material. Thus, in the present example the protection sheet 48 is made from fabric-reinforced plastics.

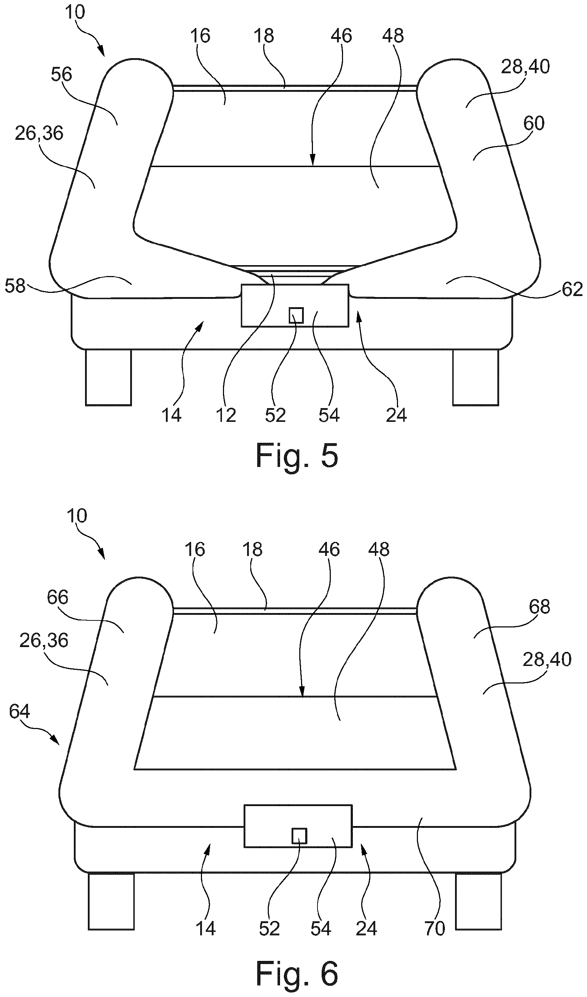

A second example of the airbag assembly 24 is shown in Figures 4 and 5, which is described in the following. It is noted that only differences between the first example and the second example are explained.

In the second example, the airbag assembly 24 comprises a singular inflator unit 52.

The singular inflator unit 52 is coupled to the first inflatable airbag portion 26 and to the second inflatable airbag portion 28.

The singular inflator unit 52 is configured for selectively inflating the first inflatable airbag portion 26 and the second inflatable airbag portion 28 simultaneously.

In more detail, the singular inflator unit 52 is configured to inflate the first inflatable airbag portion 26 and the second inflatable airbag portion 28 simultaneously such that the first inflatable airbag portion 26 changes from the non-deployed state 34 to the deployed state 36 and the second inflatable airbag portion 28 changes from the non-deployed state 38 to the deployed state 40.

The first inflatable airbag portion 26 and the second inflatable airbag portion 28 are stored in a shared housing 54 when in the non-deployed state 34, 38 or stored state.

The shared housing 54 is arranged in the front portion 14 of the vehicle 10.

The shared housing 54 is arranged at a same distance from the first a-pillar 20 and the second a-pillar 22. In other words, the shared housing 54 is located at a lateral center of the vehicle 10.

In the present second example, both the first inflatable airbag portion 26 and the second inflatable airbag portion 28 are L-shaped when in the deployed state 36, 40 (see Figure 5).

In more detail, a first leg 56 of the L-shaped first inflatable airbag portion 26 is arranged only along the first a-pillar 20 of the vehicle 10 when in deployed state 36.

A second leg 58 of the L-shaped first inflatable airbag portion 26 is arranged partially over the windscreen 16 and the front lid 12 when in deployed state 36.

A first leg 60 of the L-shaped second inflatable airbag portion 28 is arranged only along the second a-pillar 22 of the vehicle 10 when in deployed state 40.

A second leg 62 of the L-shaped second inflatable airbag portion 28 is arranged at least partially over the windscreen 16 and the front lid 12 when in deployed state 40.

Further, in the present first example, the holding means 46 is arranged in the shared housing 54 when the first inflatable airbag portion 26 and the second inflatable airbag portion 28 are in the non-deployed state 34, 38.

Additionally, the protection sheet 48 is folded when in the stored state 50.

Thus, the protection sheet 48 unfolds when the first inflatable airbag portion 26 and the second inflatable airbag portion 28 are in the deployed state 36, 40.

Similar to the first example, the protection sheet 48 is connected to a lower half of the first leg 56 of the L-shaped first inflatable airbag portion 26 and to a lower half of the first leg 60 of the L-shaped second inflatable airbag portion 28, if the first inflatable airbag portion 26 and the second inflatable airbag portion 28 are in the deployed state 36, 40.

A third example of the airbag assembly 24 is shown in Figure 6 and presented in the following. It is noted that only the differences over the previous examples will be explained.

Both the first inflatable airbag portion 26 and the second inflatable airbag portion 28 are formed as portions of a U-shaped airbag 64.

In more detail, a first portion 66 of the U-shaped airbag 64 is arranged along the first a-pillar 20 of the vehicle 10 when in deployed state. The first portion 66 may form the first inflatable airbag portion 26.

A second portion 68 of the U-shaped airbag 64 is arranged along the second a-pillar 22 of the vehicle 10 when in deployed state. The second portion 68 may form the second inflatable airbag portion 28.

A third portion 70 of the U-shaped airbag 64 is arranged at least partially over the windscreen 16 and the front lid 12 when in deployed state.

The first portion 66, the second portion 68 and the third portion 70 together form the U-shape.

Similar to the first example, the protection sheet 48 is connected to a lower half of the first portion 66 and to a lower half of the second portion 68, if the first inflatable airbag portion 26 and the second inflatable airbag portion 28, i.e. the entire U-shaped airbag 64, are in the deployed state 36, 40.

In the following, the method for operating the airbag assembly 24 for the vehicle 10 will be explained in more detail.

Before executing the method, the first inflatable airbag portion 26 and the second inflatable airbag portion 28 are assumed to be in the non-deployed state 34, 38, which corresponds to the state as shown in Figures 2 and 4.

In case of a crash situation or in preparation to a crash, wherein the vehicle 10 potentially collides with a vulnerable road user, the first inflatable airbag portion 26 is selectively deployed over the first a-pillar 20 and the second inflatable airbag portion 28 is selectively deployed over the second a-pillar 22 of the vehicle 10.

Simultaneously the holding means 46 is extended between the first inflatable airbag portion 26 and the second inflatable airbag portion 28.

In more detail, extending the holding means 46 comprises unfurling or unfolding the holding means 46.

It is noted that the first inflatable airbag portion 26 and the second inflatable airbag portion 28 are only deployable simultaneously over different ones of the first a-pillar 20 and the second a-pillar 22.

As has been mentioned before, the sensor unit 25 provides the information that both the first inflatable airbag portion 26 and the second inflatable airbag portion 28 should be deployed.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: front lid
- 14: front portion
- 16: windscreen
- 18: roof
- 20: first a-pillar
- 22: second a-pillar
- 24: airbag assembly
- 25: sensor unit
- 26: first inflatable airbag portion
- 28: second inflatable airbag portion
- 30: first inflator unit
- 32: second inflator unit
- 34: first inflatable airbag portion in non-deployed state
- 36: first inflatable airbag portion in deployed state
- 38: second inflatable airbag portion in non-deployed state
- 40: second inflatable airbag portion in deployed state
- 42: first housing
- 44: second housing
- 46: holding means
- 48: protection sheet
- 50: protection sheet in stored state
- 52: singular inflator unit
- 54: shared housing
- 56: first leg of the L-shaped first inflatable airbag portion
- 58: second leg of the L-shaped first inflatable airbag portion
- 60: first leg of the L-shaped second inflatable airbag portion
- 62: second leg of the L-shaped second inflatable airbag portion
- 64: U-shaped airbag
- 66: first portion of the U-shaped airbag
- 68: second portion of the U-shaped airbag
- 70: third portion of the U-shaped airbag

- F: standard forward driving direction

## Claims

1. An airbag assembly (24) for alleviating an impact of a vulnerable road user on a vehicle (10), the airbag assembly (24) comprising:
a first inflatable airbag portion (26) storable in a front portion (14) of the vehicle (10) and deployable over a first a-pillar (20) of the vehicle (10),
a second inflatable airbag portion (28) storable in a front portion (14) of the vehicle (10) and deployable over a second a-pillar (22) of the vehicle (10), and
a non-inflatable holding means (46) interconnecting the first inflatable airbag portion (26) and the second inflatable airbag portion (28), wherein the holding means (46) is storable in the front portion (14) of the vehicle (10) and extendable over a portion of a windscreen (16) of the vehicle (10) when the first inflatable airbag portion (26) and the second inflatable airbag portion (28) are in a deployed state (36, 40).

2. The airbag assembly (24) of claim 1, wherein the holding means (46) comprises a holding strap interconnecting the first inflatable airbag portion (26) and the second inflatable airbag portion (28) and/or wherein the holding means (46) comprises a protection sheet (48) interconnecting the first inflatable airbag portion (26) and the second inflatable airbag portion (28).

3. The airbag assembly (24) of claim 2, wherein the protection sheet (48) is deployable at a distance of the windscreen (16) of the vehicle (10) for alleviating an impact of the vulnerable road user on the windscreen (16).

4. The airbag assembly (24) of any one of the preceding claims, wherein the protection sheet (48) is furled or folded when in a stored state (50).

5. The airbag assembly (24) of any one of the preceding claims, wherein the holding means (46) is connected to a lower half of the first inflatable airbag portion (26) and to a lower half of the second inflatable airbag portion (28), if the first inflatable airbag portion (26) and the second inflatable airbag portion (28) are in the deployed state (36, 40).

6. The airbag assembly (24) of any one of the preceding claims, wherein the non-inflatable holding means (46) comprises a fabric material and/or a plastics material.

7. The airbag assembly (24) of any one of the preceding claims, wherein the first inflatable airbag portion (26) is bar-shaped when in the deployed state (36), wherein the bar-shaped first inflatable airbag portion (26) is arrangeable along the first a-pillar (20) of the vehicle (10), and wherein the second inflatable airbag portion (28) is bar-shaped when in the deployed state (40), wherein the bar-shaped second inflatable airbag portion (28) is arrangeable along the second a-pillar (22) of the vehicle (10).

8. The airbag assembly (24) of any one of claims 1 to 6, wherein the first inflatable airbag portion (26) is L-shaped when in the deployed state (36), wherein a first leg (56) of the L-shaped first inflatable airbag portion (26) is arrangeable along the first a-pillar (20) of the vehicle (10) and wherein a second leg (58) of the L-shaped first inflatable airbag portion (26) is arrangeable at least partially over the windscreen (16) and/or a front lid (12), and
wherein the second inflatable airbag portion (28) is L-shaped when in the deployed state (40), wherein a first leg (60) of the L-shaped second inflatable airbag portion (28) is arrangeable along the second a-pillar (22) of the vehicle (10) and wherein a second leg (62) of the L-shaped second inflatable airbag portion (28) is arrangeable at least partially over the windscreen (16) and/or the front lid (12).

9. The airbag assembly (24) of any one of claims 1 to 6, wherein the first inflatable airbag portion (26) and the second inflatable airbag portion (28) are formed as portions of a U-shaped airbag (64).

10. The airbag assembly (24) of any one of the preceding claims, further comprising a singular inflator unit (52) coupled to the first inflatable airbag portion (26) and to the second inflatable airbag portion (28) and configured for selectively inflating the first inflatable airbag portion (26) and the second inflatable airbag portion (28) simultaneously, or
a first inflator unit (30) coupled to the first inflatable airbag portion (26) and configured for inflating the first inflatable airbag portion (26) and a second inflator unit (32) coupled to the second inflatable airbag portion (28) and configured for inflating the second inflatable airbag portion (28), wherein the first inflatable airbag portion (26) and the second inflatable airbag portion (28) are inflatable only simultaneously.

11. The airbag assembly (24) of any one of the preceding claims, wherein the first inflatable airbag portion (26) and the second inflatable airbag portion (28) are stored in separate housings when in the non-deployed state (34, 38).

12. The airbag assembly (24) of any one of claims 1 to 10, wherein the first inflatable airbag portion (26) and the second inflatable airbag portion (28) are stored in a shared housing (54) when in the non-deployed state (34, 38).

13. A vehicle (10) comprising an airbag assembly (24) of any one of the preceding claims.

14. A method for operating an airbag assembly (24) for a vehicle (10), the method comprising:
selectively deploying a first inflatable airbag portion (26) over a first a-pillar (20) and a second inflatable airbag portion (28) over a second a-pillar (22) of the vehicle (10) and
simultaneously extending a holding means (46) between the first inflatable airbag portion (26) and the second inflatable airbag portion (28).

15. The method of claim 14, wherein extending the holding means (46) comprises unfurling or unfolding the holding means (46).
